# EUROPÄISCHE PATENTANMELDUNG

(11) **EP 1 463 169 A2**
(43) Veröffentlichungstag der Anmeldung: **29.09.2004**
(21) Anmeldenummer: 04006309.1
(22) Anmeldetag: 17.03.2004
(51) Int. Cl.: H02B 1/30

(54) **"Zähler-und /oder Verteilerschrank"**

(30) Priorität: 24.03.2003 DE 20304953 U; 24.03.2003 DE 20304954 U; 24.03.2003 DE 20304955 U; 09.05.2003 DE 10321587
(71) Anmelder: Hager Electro GmbH, 66131 Saarbrücken (DE)
(72) Erfinder: Hein, Peter, D-66386 St. Ingbert (DE); Amendola, Ettore, D-66131 Saarbrücken (DE)
(74) Vertreter: Bernhardt, Reinold, Dr. Dipl.Phys.

(57) **Zusammenfassung**

Die Erfindung betrifft einen Zähler- und/oder Verteilerschrank, der erfindungsgemäß Wandöffnungen (5) zum Einstecken eines blockartigen Verbindungsstücks (6) für die Verbindung des Schranks mit einem am Schrank außen angebrachten Teil aufweist.

## Beschreibung

Die Erfindung betrifft einen Zähler- und/oder Verteilerschrank, wie er insbesondere in Ein- und Mehrfamilienhäusern zum Einsatz kommt.

Bei solchen, durch Benutzung bekannten Zähler- und Verteilerschränken handelt es sich meist um Konstruktionen aus lackiertem Blech mit einer isolierenden Innenverkleidung oder nur aus Kunststoff bestehenden Konstruktionen. Die Schränke schützen die Zähler- und Verteilereinrichtungen des Hauses zum einen gegen äußere Einflüsse, wie Verschmutzung. Zum anderen werden durch den Schrank Netzspannung führende Teile nach außen abgeschirmt.

Der vorliegenden Erfindung liegt die Aufgabe zugrunde, einen neuen Zähler- und Verteilerschrank mit erweiterten Nutzungsmöglichkeiten zu schaffen.

Der diese Aufgabe lösende Zähler- und/oder Verteilerschrank nach der Erfindung ist gekennzeichnet durch wenigstens eine Wandöffnung zum Einstecken eines blockartigen Verbindungsstücks für die Verbindung des Schranks mit einem am Schrank außen angebrachten Teil.

Vorteilhaft lässt sich ein solcher Zähler- und/oder Verteilerschrank baukastenartig erweitern und z.B. mit am Schrank außen verlegten Kabelkanälen verbinden, wie dies in der hier einbezogenen deutschen Patentanmeldung 103 13 838.2 des Anmelders beschrieben ist. Insbesondere kann als am Schrank außen anzubringendes Teil ein weiterer Zähler- und/oder Verteilerschrank vorgesehen sein. An der Unterseite eines Zähler- und/oder Verteilerschranks lässt sich ein Sockel anbringen.

In der bevorzugten Ausführungsform der Erfindung ist die Wandöffnung länglich und in einem mit Korpuswänden und ggf. der Rückwand des Schrankes verbindbaren Schrankeckenteil gebildet.

Das Eckenteil kann sich über die gesamte Schranktiefe oder einen Teil der Schranktiefe erstrecken und z.B. lediglich eine in der Schrankwand gebildete Aussparung ausfüllen.

Während es denkbar ist, die Wandöffnung als Durchgangsöffnung auszubilden, handelt es sich in der bevorzugten Ausführungsform um eine, vorzugsweise in dem Eckenteil gebildete, Einsenkung, welche an die Form des blockartigen Verbindungsstücks angepasst ist.

Vorzugsweise sind Einrichtungen zum Einrasten des Verbindungsstücks in der Wandöffnung vorgesehen.

In weiterer Ausgestaltung der Erfindung weist ein mit dem Zähler- und/oder Verteilerschrank zu verbindender weiterer Zähler- und Verteilerschrank eine entsprechende Wandöffnung auf und das Verbindungsstück ist als an zwei Steckerenden in die Wandöffnungen einschiebbares Verbindungsstück ausgebildet.

Zwischen den Steckerenden kann ein Anschlagsteg gebildet sein, welcher je zur Hälfte eine Ausnehmung am Eckenteil ausfüllt.

In weiterer vorteilhafter Ausgestaltung der Erfindung kann das Eckenteil Bohrungen zur Verbindung mit einem Blechwinkel aufweisen, wobei der Blechwinkel zur Befestigung des Schranks in einer Wandeinsenkung vorgesehen sein kann. Die Befestigung erfolgt dann über einen zur Schrankvorderwand etwa bündigen Winkelschenkel des Blechwinkels.

Statt einer direkten Schraubverbindung mit dem Eckenteil könnte auch eine indirekte Verbindung zum Eckenteil über den Verbindungsblock vorgesehen sein.

In weiterer vorteilhafter Ausgestaltung der Erfindung weist das Eckenteil Einrichtungen zur Verbindung mit einem an der Schrankvorderwand angebrachten Blendrahmen oder/und zur Verbindung mit einer Schranktür auf.

Zweckmäßig ist ein Blindstecker vorgesehen, mit dem sich die Wandöffnungen, wenn sie nicht als Verbindungsmittel genutzt werden, abdecken lassen.

Vorteilhaft können die Wandöffnungen Griffe bilden, welche den Transport und die Handhabung des Schranks erleichtern.

Die Erfindung soll nun anhand von Ausführungsbeispielen und der beiliegenden, sich auf diese Ausführungsbeispiele beziehenden Zeichnungen näher erläutert werden. Es zeigen:
- Fig. 1: eine Teilansicht eines Zähler- und Verteilerschranks mit einem Verbindungsblock zum Verbinden zweier solcher Schränke miteinander,
- Fig. 2: einen Zähler- und Verteilerschrank nach der Erfindung, an den über einen Verbindungsblock ein Kabelkanal angeschlossen ist,
- Fig. 3: einen Zähler- und Verteilerschrank nach der Erfindung mit einem zur Verbindung mit einem Blechwinkel vorbereiteten Eckenteil und einem an dem Eckenteil angebrachten Blendrahmen,
- Fig. 4: einen Zähler- und/oder Verteilerschrank nach der Erfindung mit einem Blindsteckerteil,
- Fig. 5: eine Teilansicht eines Zähler- und Verteilerschranks mit einem Verbindungsblock zur Verbindung zweier vertikal übereinander angeordneter solcher Schränke, und
- Fig. 6: eine Teilansicht eines Zähler- und Verteilerschranks mit einem zwei Einstecköffnungen aufweisenden Verbindungsblock.

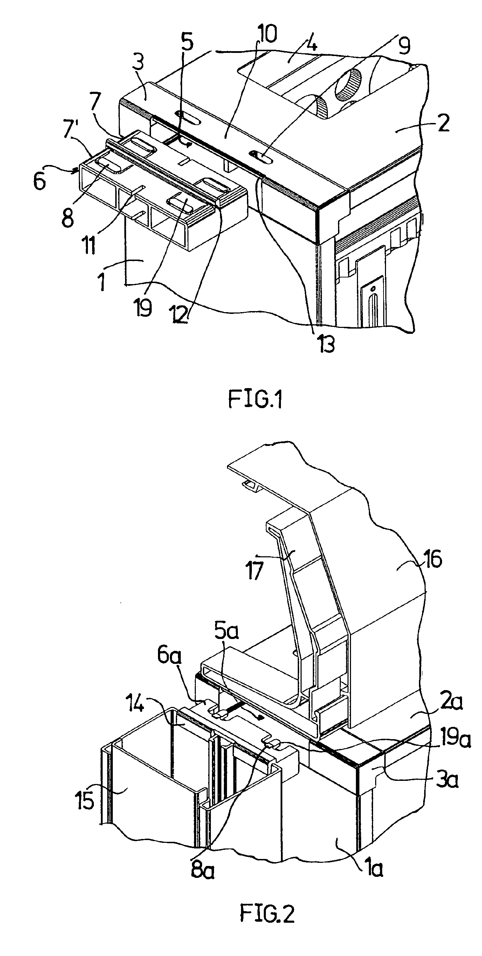

Ein in Fig. 1 ausschnittsweise ohne Tür gezeigter Zähler- und Verteilerschrank weist zueinander senkrechte Korpuswände 1 und 2 aus Blech auf, die über ein Eckenteil 3 aus Kunststoff miteinander verbunden sind. Das Eckenteil 3 ist mit einem in Fig. 1 nicht sichtbaren Fußteil zur Verbindung mit der Schrankrückwand versehen. Eine ausführliche Beschreibung der Schrankkonstruktion enthält die hier einbezogenen Anmeldung 103 13 839.0 des Anmelders.

Eine Öffnung 4 in der oberen Korpuswand 2 dient der Durchführung von Kabeln.

Das Eckenteil 3 weist eine zur Schrankseite öffnende Einsenkung 5 auf, in welche sich ein blockartiges Verbindungsstück 6 mit einem ersten Steckerende 7 einführen lässt.

Wie aus Fig. 1 hervorgeht, ist das Verbindungsstück 6 mit einem zweiten, dem Steckerende 7 entgegengesetzten Steckerende 7' versehen.

An beiden Steckerenden des weitgehend als Hohlblock ausgebildeten Verbindungsstücks 6 befinden sich jeweils zwei Rastnasen 8 zum Einrasten in Rastlöcher 9, welche in einer verhältnismäßig dünnen, nachgiebigen Begrenzungswand 10 der Einsenkung 5 gebildet sind. Die Rastnasen 8 sind jeweils auf einer abbiegbaren, durch einen U-Schlitz gebildeten Zunge 19 angeordnet.

Beide Steckerenden 7,7' weisen ferner in der Mitte einen Vertikalschlitz 11 auf, in welchen ein innerhalb der Einsenkung 5 gebildeter Steg 18 eingreifen kann.

Die beiden Steckerenden 7,7' trennt symmetrisch ein Anschlagsteg 12, dessen Höhe gleich der Dicke der Begrenzungswand 10 ist.

Die Begrenzungswand 10 weist einen Rücksprung 13 von der halben Breite des Stegs 12 auf.

Über das Verbindungsstück 6 lässt sich der gezeigte Zähler- und Verteilerschrank mit einem weiteren solchen Schrank verbinden, welcher eine der Einsenkung 5 entsprechende Einsenkung für die Aufnahme des Steckerendes 7' aufweist. Die in den Einsenkungen 5 geführten Steckerenden 7,7' rasten mit ihren Nasen 8 in den Rastlöchern 9 ein. Für eine weitere Stabilisierung der Verbindung sorgt der Eingriff des Innenstegs 18 in die vertikalen Schlitze 11.

Der Steg 12 ist jeweils zur Hälfte in den betreffenden Rücksprüngen 13 der Begrenzungswand 10 aufgenommen und ist bündig zur Oberseite der einander gegenüberliegenden Eckenteile 3. Eine der gezeigten Verbindung entsprechende Verbindung kann auch an den betreffenden unteren Schrankecken der miteinander verbundenen Schränke vorgesehen sein. Durch die den Anschlagsteg 12 aufnehmenden Rücksprünge 13 ist gesichert, dass die einander gegenüberliegenden Seitenwände 1 der Schränke aneinander anliegen können.

In den nachfolgenden Fig. 2 bis 6 sind gleiche oder gleichwirkende Teile mit derselben Bezugszahl wie in Fig. 1 bezeichnet, wobei der betreffenden Bezugszahl jeweils der Buchstabe a, b usw. beigefügt ist.

Fig. 2 zeigt ein in eine Einsenkung 5a in einem Eckenteil 3a einführbares Verbindungsstück 6a, welches Krallen 14 für die Verbindung mit einem Kabelkanal 15 aufweist.

Der an der Schrankaußenseite vertikal geführte Kabelkanal 14 wird durch einen horizontalen Kanalteil fortgeführt, welcher durch ein hier abschnittsweise dargestelltes Winkelteil 16 gebildet ist. Das Winkelteil 16 lässt sich über einen gewinkelten Halter 17 an der Oberseite des Zähler- und Verteilerschranks befestigen, wobei sich der Halter 17 durch Schrauben, Bolzen oder vorstehende Zapfen mit dem Eckenteil 3a verbinden lässt.

Rastnasen 8a sind jeweils auf einer Zunge 19a angeordnet, welche nicht durch einen U-Schlitz wie bei vorangehenden Ausführungsbeispiel sondern durch Randeinschnitte gebildet ist.

Ein Zähler- und Verteilerschrank mit solchen Kabelkanälen ist in der hier einbezogenen Anmeldung 103 13 838.2 des Anmelders ausführlich beschrieben.

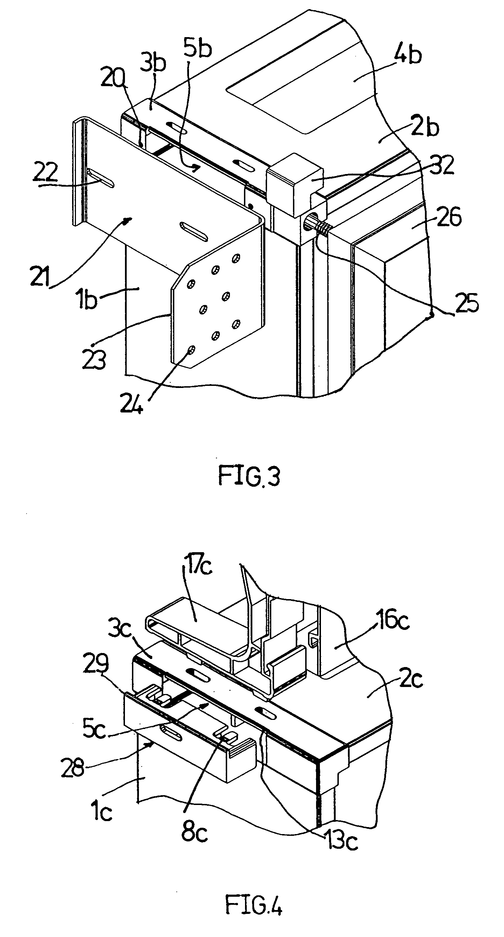

Ein Eckenteil 3b eines in Fig. 3 gezeigten Zähler- und Verteilerschranks weist zu beiden Seiten einer Einsenkung 5b jeweils eine Bohrung 20 zur Schraubverbindung mit einem Blechwinkel 21 auf, welcher entsprechend den beiden Bohrungen 20 mit Langlöchern 22 versehen ist.

Über einen Winkelschenkel 23 des Blechwinkels 21 lässt sich der in eine Wandeinsenkung eingeführte Zähler- und Verteilerschrank im Mauerwerk nahe dem Rand der Einsenkung befestigen. Der Winkelschenkel 23 weist mehrere, wahlweise benutzbare Befestigungsbohrungen 24 auf. Abweichend von dem gezeigten Beispiel ließe sich der Blechwinkel 21 auch in umgekehrter Anordnung mit dem Blechwinkel 23 zur Wand verwenden.

An dem Eckenteil 3b lässt sich ferner mit Hilfe von Sägezahnstiften 25 an der Vorderseite des Zähler- und Verteilerschranks ein Blendrahmen 26 anbringen. Wird kein Blendrahmen benutzt, so lässt sich die Öffnung am Eckenteil 3b für den Sägezahnstift 25 durch eine auf das Eckenteil aufsetzbare Kappe 32 verschließen.

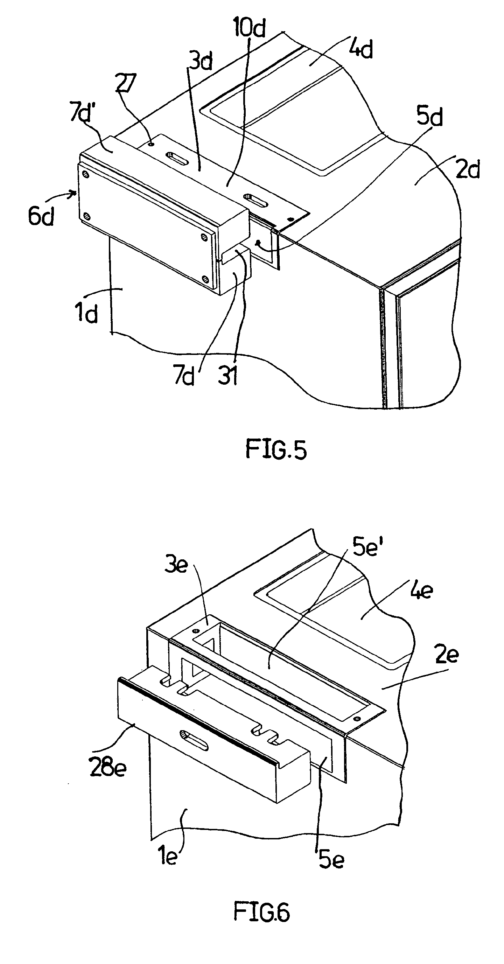

Eine Einsenkung 5c gemäß Fig. 4, die zur Verbindung mit einem anderen Schrank oder am Schrank außen anzubringenden Teilen verwendbar ist, lässt sich bei Nichtbenutzung der Einsenkung zu Verbindungszwecken, z.B. an der der Schrankecke von Fig. 3 gegenüberliegenden oberen Schrankecke, mit einem Blindsteckerteil 28 abdecken. Ein Anschlagsteg 29 des Blindsteckers füllt bündig zur Schrankaußenoberfläche einen Rücksprung 13c aus.

Ein in Fig. 5 gezeigtes Eckenteil 3d erstreckt sich nicht über die gesamte Schranktiefe, sondern füllt nur einen in zueinander senkrechten Blechwänden 1 d und 2d gebildete Eckenaussparung aus. Das Eckenteil 3d weist Bohrungen 27 zur Befestigung eines dem Halter 17 von Fig. 2 entsprechenden Halters auf.

Ein Verbindungsstück 6d ist mit zwei, in die gleiche Richtung weisenden Steckerenden 7d und 7d' versehen, wobei zwischen den Steckerenden 7d und 7d' ein Schlitz 31 mit einer Breite, welche der zweifachen Dicke einer Begrenzungswand 10d eines Eckenteils 3d entspricht, gebildet ist.

Das Steckerende 7d' wird in eine der Einsenkung 5d entsprechende Einsenkung eines Eckenteils an einer unteren Ecke eines über dem gezeigten Zähler- und Verteilerschranks angeordneten Zähler- und Verteilerschrank eingeführt.

Aus Fig. 6 geht ein Eckenteil 3e hervor, das neben einer Einsenkung 5e eine weitere Einsenkung 5e' aufweist, so dass mittels eines Steckverbindungselements in zwei zueinander senkrechten Richtungen Teile am Zähler- und Verteilerschrank befestigt werden können.

Es wäre denkbar, Steckverbindungselemente vorzusehen, welche die halbe Länge der Einsenkung 5e bzw. 5e' aufweisen, so dass über solche Steckverbindungselemente gleichzeitig Verbindungen zu neben dem Zähler- und Verteilerschrank als auch über bzw. unter dem Verteilerschrank anzubringenden Teilen hergestellt werden können.

Eine Kartonverpackung für die Zähler- und Verteilerschränke kann bei den Einsenkungen einen U-Ausschnitt aufweisen, durch den eine in die Einsenkung einschwenkbar Klappe gebildet ist. Damit weist auch ein verpackter Zähler- und Verteilerschrank den Transport erleichternde Griffmöglichkeiten auf.

## Patentansprüche

1. Zähler- und/oder Verteilerschrank,
**gekennzeichnet durch** eine Wandöffnung (5) zum Einstecken eines blockartigen Verbindungsstücks (6,6a) für die Verbindung des Schranks mit einem am Schrank außen angebrachten Teil (15-17).

2. Zähler- und/oder Verteilerschrank nach Anspruch 1,
**dadurch gekennzeichnet,**
**dass** als am Schrank außen angebrachtes Teil ein weiterer Zähler- und/oder Verteilerschrank vorgesehen ist.

3. Schrank nach Anspruch 1 oder 2,
**dadurch gekennzeichnet,**
**dass** die Wandöffnung länglich und in einem mit Korpuswänden (1,2) und ggf. der Rückwand des Schrankes verbindbaren Eckenteil (3) gebildet ist.

4. Schrank nach Anspruch 3,
**dadurch gekennzeichnet,**
**dass** sich das Eckenteil (3) über die gesamte Tiefe des Schranks oder über einen Teil der Schranktiefe erstreckt.

5. Schrank nach Anspruch 3 oder 4,
**dadurch gekennzeichnet,**
**dass** das Eckenteil (3c) eine in der Schrankwand gebildete Aussparung (30) ausfüllt.

6. Schrank nach einem der Ansprüche 1 bis 5,
**dadurch gekennzeichnet,**
**dass** die Wandöffnung durch eine Einsenkung (5) in der Schrankwand, vorzugsweise dem Eckenteil, gebildet ist.

7. Schrank nach einem der Ansprüche 1 bis 6,
**dadurch gekennzeichnet,**
**dass** Einrichtungen (8,9) zum Einrasten des Verbindungsstücks (6) in der Wandöffnung (5) vorgesehen sind.

8. Schrank nach einem der Ansprüche 1 bis 7,
**dadurch gekennzeichnet,**
**dass** das Verbindungsstück (6) zwei Steckerenden (7,7') zum Einführen in einander gegenüberliegende Wandöffnungen (5) zweier miteinander zu verbindender Schränke aufweist.

9. Schrank nach Anspruch 8,
**dadurch gekennzeichnet,**
**dass** zwischen den Steckerenden (7,7') ein Steg (12) gebildet und am Schrank ein den Steg aufnehmender Rücksprung (13) mit der halben Stegbreite gebildet ist.

10. Schrank nach einem der Ansprüche 1 bis 9,
**dadurch gekennzeichnet,**
**dass** das Eckenteil (3b) Bohrungen (20) zur Verbindung mit einem Blechwinkel (21) für die Befestigung des Schranks in einer Wandeinsenkung aufweist.

11. Schrank nach einem der Ansprüche 1 bis 10,
**dadurch gekennzeichnet,**
**dass** das Eckenteil (3b) Einrichtungen (25) zur Verbindung mit einem Blendrahmen (26) und/oder einer Schranktür aufweist.

12. Schrank nach einem der Ansprüche 1 bis 11,
**dadurch gekennzeichnet,**
**dass** ein Blindsteckerteil (28) zum Abdecken der Wandöffnung (5c) vorgesehen ist.
